# EUROPEAN PATENT APPLICATION

(11) **EP 1 770 967 A1**
(43) Date of publication of application: **04.04.2007**
(21) Application number: 06121703.0
(22) Date of filing: 04.10.2006
(51) Int. Cl.: H04M 1/253, H04M 1/738

(54) **VOIP with local call access**

(30) Priority: 03.10.2005 US 723333 P
(71) Applicant: Lagunawave, Inc., 92867 CA California Orange (US)
(72) Inventor: Ryan, Sean, Laguna Beach, CA 92651 (US); Riscalla, Daniel, Orange, CA 92867 (US)
(74) Representative: Dr. Graf & Partner

(57) **Abstract**

The invention provides a method and system of transmitting a telephone call, comprising: interposing a first adapter between a first telephone and a first telephone utility line, wherein the first adapter is programmed to receive a voice signal transmitted by the first telephone; the first adapter receiving a telephone number transmitted by the first telephone, and the first adapter, as a function of the telephone number, determining whether to (i) pass the telephone number through to the first telephone utility line, or (ii) pass a different access number through to the first telephone utility line; connecting the first telephone utility line to a first server and sending the voice signal through the first telephone utility line to the first server; sending the voice signal from the first server as a series of packets through a packet switched network to a second server; and the second server transmitting and receiving the voice signal to a second telephone via a second telephone utility line; and in particular providing a flat-fee subscription service to the user for use of the adapter.

## Description

### Cross-Reference to Related Applications

This application claims priority from U.S. Provisional Pat. Application No. 60/723, 333, filed on October 03, 2005 which is hereby incorporated by reference in their entirety.

### Field of the Invention

The field of the invention is telecommunication routers.

### Background of the Invention

Traditionally, conventional long distance telephone dialing requires the use of a plain old telephone system (POTS) telephone device and the public switched telephone system (PSTN). Within the PSTN framework, there are two exchanges for long distance and local calls. For long distance calls, there is the circuit switched inter-exchange (IXC) carrier. AT&T, Verizon, and Sprint are all examples of IXC carriers in America. For local calls, there is the local exchange carrier (LEC). Thus, when a user dials a phone number, the call is conventionally routed to one of two places. If the user dials a local number, the call is routed to the LEC. If the user dials a long distance number, the call is first routed to the LEC, then through the IXC.

Toll charges for long distance calls typically have two components, a LEC charge and an IXC charge. Charges for the IXC portion are often based upon (i) the length of time and (ii) distance between the parties, and can be expensive.

New technologies have emerged to ease the problem of expensive long distance telephone calls. Most notably, the Internet allows users to make long distance telephone calls via Voice-Over IP (VOIP) technology. As shown in U.S. 6,600,733 to Deng (2003) and U.S. 2002/0114439 to Dunlap (2002), VOIP technology works by converting analog voice into digital data packets and sending the packets over the Internet to another communication network. Since the digitized packets are not sent via the IXC, the user is not billed for a long distance toll charge through the IXC. Instead, users subscribe to a VOIP service which allows them to access a server that can make VOIP long distance phone calls for much lower fees. The '733 and '439 publications, as well as any other referenced extrinsic materials are incorporated herein by reference in their entirety.

Despite their emerging popularity, there are drawbacks with the current VOIP providers. Systems such as the '733 patent and the '439 application are designed only for subscribers who already have Internet access, whether it is through dial-up or broadband (DSL or Cable). Not only do the callers need to have Internet access, receivers of calls from subscribers also have to have Internet access to simply receive calls. For dial-up users, this requires logging on the Internet continuously to receive and make calls. Since some Internet service providers charge customers based on time, this can be expensive, and does not adequately solve the problem of expensive long distance calls.

Other programs, such as those described in U.S. 6,243,373 to Turock (2001) and U.S. 6,067,350 to Gordon (2000) addressed the problem in part by providing VOIP services on POTS telephones without Internet subscription. But these programs require the callers to make a series of inputs on the telephone before inputting a long distance telephone number. For example, the program in the '890 patent requires the user to dial a prefix first, which routes to a system that prompts the user for a long distance number, the user then inputs the long distance number, and waits for the call to connect. In some cases, the user is required to speak out loud the domain name of the service provider into the telephone before receiving a prompt to input the long distance number. The process is cumbersome and complicated.

Recent VOIP technology also tries to solve this problem by providing automated services that allows for direct dialing, such as shown in U.S. 7,050,426 to Veschi (2006). The '426 patent provides service in which the user can dial a telephone number and the telephone will automatically dials out to either a conventional carrier or a VOIP provider. Similarly, a device called FaxSav^{SM} produced by FaxSav Incorporation allows for the routing of a long distance number for faxing.

However, both the FaxSav and the '426 still does not solve the issue of expensive long distance calls and convenience. Both devices requires the caller still to either pay-up front for a pre-set amount of minutes or pay on a minute by minute basis. While the bill may be reduced, users of these devices still have to be diligent in monitoring their usage since they are paying on a minute by minute basis.

Furthermore, the '426 patent also requires upgrading or changing the traditional phone entirely to dial and receive VOIP calls. Another inconvenience of the '426 patent requires the user to dial an extra "0" or "00" when dialing into a computer-base telephone on the receiving end. Not only can the extra digits be time-consuming, but users may have difficulties in assessing which telephone number requires extra digits when dialing.

There are also many other VOIP-ready phones on the market. They are adapted to dial a local data server, and make the call through over the Internet through the data server. Another example of VOIP-ready phone is Skype^{™}'s Cordless DUALPhone. But there are two drawbacks on these VOIP-ready phones. First, some of these VOIP-ready telephones, such as the Skype^{™}'s Cordless DUALPhone, still require the user to have a computer and Internet access since the phone has to be connected to the Internet. Second, these VOIP-ready phones are expensive and render POTS telephones useless.

Therefore, there is a need for a communication system and device that allows for inexpensive long distance calls and is easy to use with existing POTS telephones. This problem is solved with a method comprising the features of claim 1. Claims 2 to 12 disclose further advantageous method steps. The problem is further solved with a system comprising the features of claim 13. Claims 14 to 23 disclose further advantageous features of the system.

This and all other referenced extrinsic materials are incorporated herein by reference in their entirety. Where a definition or use of a term in an incorporated reference is inconsistent or contrary to the definition of that term provided herein, the definition of that term provided herein applies and the definition of that term in the reference does not apply.

### Summary of The Invention

The current invention provides systems, methods and apparatus in which a method of marketing a telephone service, comprises marketing a first adapter that can be functionally interposed between a first telephone and a first telephone utility line, and is programmed to receive a voice signal transmitted by the first telephone; programming the first adapter to receive a telephone number transmitted by the first telephone, and as a function of the telephone number to determine whether to (i) pass the telephone number through to the utility line, or (ii) pass a different access number through to the utility line; receiving the voice signal through the first telephone utility line by a first server; programming the first server to send the voice signal as a series of packets through a packet switched network to a second server; programming the second server to transmit and receive the voice signal to a second telephone via a second telephone utility line; and providing a flat-fee subscription service to the user of the adapter.

The problem is in particular solved with a method of transmitting a telephone call, comprising: interposing a first adapter between a first telephone and a first telephone utility line, wherein the first adapter is programmed to receive a voice signal transmitted by the first telephone; the first adapter receiving a telephone number transmitted by the first telephone, and the first adapter, as a function of the telephone number, determining whether to (i) pass the telephone number through to the first telephone utility line, or (ii) pass a different access number through to the first telephone utility line; connecting the first telephone utility line to a first server and sending the voice signal through the first telephone utility line to the first server; sending the voice signal from the first server as a series of packets through a packet switched network to a second server; and the second server transmitting and receiving the voice signal to a second telephone via a second telephone utility line; and in particular providing a flat-fee subscription service to the user of the adapter.

The problem is further in particular solved with a system for transmitting a telephone call, comprising: a first adapter that can be functionally interposed between a first telephone and a first telephone utility line, and is programmed to receive a voice signal transmitted by the first telephone; the first adapter is programmed to receive a telephone number transmitted by the first telephone, and as a function of the telephone number to determine whether to (i) pass the telephone number through to the first telephone utility line, or (ii) pass a different access number through to the first telephone utility line to connect the first telephone utility line with a first server; the first server is programmed to send the voice signal as a series of packets through a packet switched network to a second server; and the second server is programmed to transmit and receive the voice signal to a second telephone via a second telephone utility line; to in particular provide a flat-fee subscription service to the user of the adapter.

The access number is preferably selected to avoid use of a long distance public switched telephone network (PSTN). Among other benefits, this allows callers to utilize their standard (analog) landline to make long distance calls with little or no charge, and can provide a huge cost savings on long distance service costs.

In preferred embodiments the adapter is a "dongle" functionally interposed between the calling telephone and a nearby telephone utility line. The adapter routes the call to a first server, which then converts the voice signal to the series of packets. At the receiving end of the call, a second server converts the series of packets back into a voice signal, and transmits the call to the receiving telephone. The receiving telephone can connect to its telephone utility line in any suitable manner, including wired or wireless communication, and using another adapter or direct link. Use of an adapter allows the system to function on virtually any telephone, including a POTS phone. Similarly, all possible telephone plug and jack are included for the first adapter.

The first server can advantageously add a signal linking identifier to the series of packets, which enables the receiving party to trace back to the first telephone. Additionally, the second server can advantageously add a recognition code to the signals passed along to the second telephone utility line. The servers preferably have and/or utilize sufficient resources to approximate real-time voice communication between the calling telephone and the receiving telephone.

Currently, the most preferred packet switched network for carrying the series of packets is the Internet. But of course the current Internet will evolve (e.g., from IPv4 to IPv6), and can be replaced in whole or in part by another network. In addition, there already are entirely different networks over which the series of packets could be routed. Thus, all suitable networks are contemplated for carrying the packets, regardless of whether or not such networks are even in existence today.

In yet another aspect of the inventive subject matter, a website can provide registration functionality. Furthermore, the website can provide call history records. Preferably, the services and the device can be programmed remotely.

It is still further contemplated that adapters can be marketed along with instructions for configuring selection of an access number. Adapters can also be marketed and advertised as providing some sort of fixed flat fee, which could be monthly, annually or even a lifetime fee.

Various objects, features, aspects and advantages of the present invention will become more apparent from the following detailed description of preferred embodiments of the invention, along with the accompanying drawings in which like numerals represent like components.

### Brief Description of The Drawing

Fig. 1 is a device according to the present inventive subject matter.
Fig. 2 is a device with internal components according to the present inventive subject matter.
Fig. 3 is a flow chart according to the present inventive subject matter.
Fig. 4 is an illustration according to the present inventive subject.

### Detailed Description

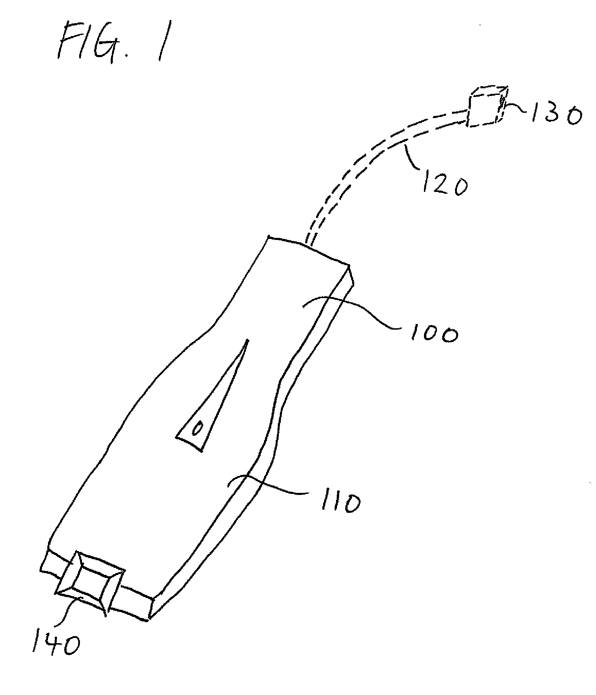

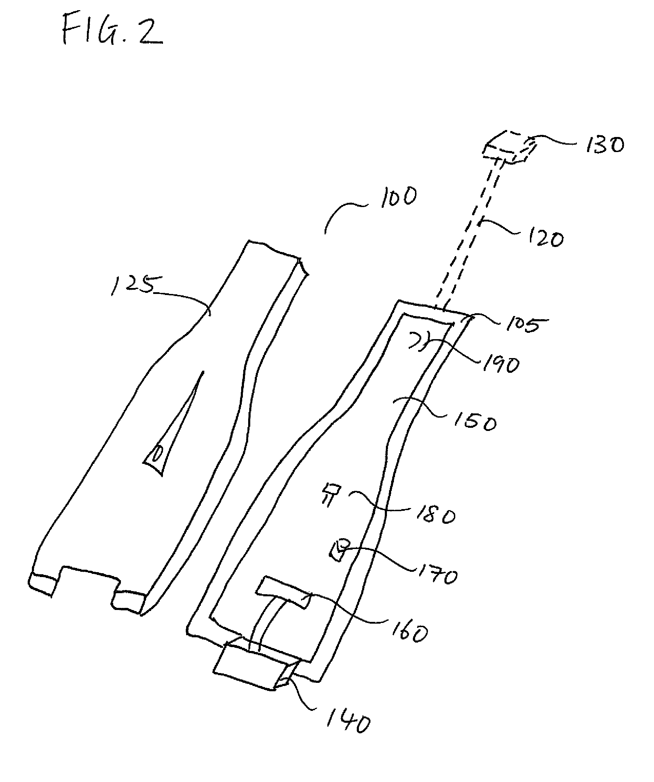

In an exemplary configuration as depicted in Figures 1 and 2, a plug-in device 100 generally comprises a housing 110, an optional cord 120 with a male connector 130, a female connector 140, and a circuit board 150.

Housing 110 should be sufficiently large to provide adequate interfaces for the male connector 130, the female connector 140, and the circuit board 150. Preferably, housing has a bottom portion 105 and a top portion 125 in which each portion can be fitted together via screws (not shown). At the edge where bottom portion 105 and top portion 125 come together, there is an opening that allows female connector 140 to be exposed. It is also contemplated that bottom portion 105 has an opening on the opposite end of female connector 140 to allow cord 120 to extend itself from the inside of the housing to the outside. Cord 120 is optional and in its place, the device can have either a female or male connector to connect the housing to an external source..

It is also preferred, housing 110 is approximately 10 cm long, 5 cm wide and 1.25 cm thick in order to house the necessary components. It is contemplated, however, that the housing could have a thickness of as little as possible and still house the components. Being compact is contemplated to be especially useful in settings where there is not much room for a plug-in device, such as between a wall and a bookcase. Thus, it is contemplated that the plug-in device should be compact and easy to inter change. It is also contemplated that housing 110 can be made of any material that is sufficiently durable, but preferably plastic. It may even be useful for the housing to provide some measure of water resistance, or even water proofing.

Cord 120 is can be made up with a group of wire strands bundled or twisted together as a functional unit and is attached to circuit board 150 and extends to male connector 130. Preferably, cord 120 is a pair of twisted telephone wires, but it can be other types of communication wires to transmit and receive a telephone connection. It is also contemplated that cord 120 should be at least four (4) inches to accommodate attaching plug-in device 100 to a telephone device. However, cord can be as long as it needs to be to facilitate a connection between a telephone and plug-in device.

Male connector 130 is a connector attached to cord 120 and constructed in such a way that it can be inserted snugly into a receptacle or a female connector to ensure a reliable physical and electrical connection. Male connector receives and transmits analog telephone data from a PSTN to plug-in device for any local calls. It is contemplated, male connector is a two- or three-prong plug attached to the end of the cord. Male connector can be recognized by the fact that, when it is disconnected or removed, the unshielded electrical prongs are plainly visible.

Female connector 140 is a connector with receptacles designed to receive male connector to ensure a reliable physical and electrical connection. Female connector receives and transmits analog telephone data from the plug-in device to a telephone. Preferably, female connector 140 is attached by wires to circuit board 150. Female connector fits snuggly and is exposed at the edge between top and bottom portions of housing.

Both male and female connectors are also referred to as telephone jacks. The jacks are also known as registered jacks, sometimes described in a RJ-XX format, which are a series of telephone connection interfaces (receptacle and plug) that are registered with the U.S. Federal Communications Commission (FCC). There are three common RJ-XX type of jacks.

Preferably, plug-in device 100 is an adapter that uses a RJ-11 jack, which is the most common telephone jack and can have six conductors but usually is implemented with four. The RJ-11 jack is likely to be the jack that in everyday household or office phones are plugged into from the ordinary "untwisted" wire (sometimes called "gray satin" or "flat wire") people are most familiar with. The four wires are usually characterized as a red and green pair and a black and white pair. The red and green pair typically carry voice or data. On an outside phone company connection, the black and white pair may be used for low-voltage signals such as phone lights. On a public system, they may be used for other kinds of signaling.

Twisted pair is the ordinary copper wire that connects home and many business computers to the telephone company. To reduce crosstalk or electromagnetic induction between pairs of wires, two insulated copper wires are twisted around each other. Each connection on twisted pair requires both wires. Since some telephone sets or desktop locations require multiple connections, twisted pair is sometimes installed in two or more pairs, all within a single cable. For some business locations, twisted pair is enclosed in a shield that functions as a ground. This is known as shielded twisted pair (STP). Ordinary wire to the home is unshielded twisted pair (UTP). Twisted pair is now frequently installed with two pairs to the home, with the extra pair making it possible to add another line (perhaps for modem use). Twisted pair comes with each pair uniquely color coded when it is packaged in multiple pairs. Different uses such as analog, digital, and Ethernet require different pair multiples.

Another common jack is the RJ -14. The RJ-14 is similar to the RJ-11, but the four wires are used for two phone lines. Typically, one set of wires (for one line) contains a red wire and a green wire. The other set contains a yellow and black wire. Each set carries one analog "conversation" (voice or data). Then, there is the RJ-45, which is a single-line jack for digital transmission over ordinary phone wire, either untwisted or twisted. The interface has eight pins or positions. There are two varieties of RJ-45: keyed and unkeyed. The keyed one has a small bump on its end and the female complements it. Both male connector and female connector must match.

In preferred embodiments, circuit board 150 is preferably disposed in housing as one unit, although it can be split among multiple components. Figure 2 shows a preferred embodiment of circuit board 150, which comprises a chip 160, a power source 170, a signal indicator 180, and wires 190.

In another preferred embodiment, circuit board 150 can be any printed circuit boards (PCB) which are inexpensive and highly reliable. Preferably, circuit board can be produced using a silk screening method. But other methods of production, such as photoengraving or PCB milling can also be used.

Chip 160 is a digital component with miniature transistors that serves as the central processing unit in the plug-in device. The chip has two main functions. First, it sorts out the local telephone calls versus the long distance telephone calls, including local toll (calls that have the same area code, but nevertheless is considered to be a long distance call). Second, once chip 160 recognizes a long distance call, it encodes the analog signal of the call and sends it to a server with a local number through the local PSTN instead of a long distance PSTN. Thus, long distance charges will not apply. Once the server receives the call, a packet stream sends the analog signal to the analog signal into digitized packets and send it via the Internet to a second server away from the first server. The second server then decodes the signals for transmission to another telephone. Preferably, chip is included in at least the housing of the plug-in device to facilitate the communications of all signals. It is also contemplated that chip may be programmed remotely. Furthermore, the chip receives signals from the first server and transmits the signals back to the telephone unit.

Preferred modules can advantageously include power source 170 to provide energy to plug-in device. Power source 170 has a power feed of no more than 15 Volts DC, although higher and lower power feeds are contemplated as required by the circuitry. Currently, the most preferred voltage is 10 V.

Signal indicator 180 is a light emitting diode and is also communicatively coupled to circuit board 150 by wires 190. Circuit board preferably controls power to signal indicator. The function of signal indicator is to indicate whether signals sent between the plug-in device from the wall jack to the telephone are being received. It is contemplated, when chip is receiving signals or in other uses, signal indicator can blink to indicate different transmission speed or whether it is being transmitted at all.

Signal indicators 180 preferred to emit visible light having a red color, but it can emit different colors. It should be understood by one of skill in the art that other types of light sources can be substituted for an LED (e.g. an incandescent bulb).

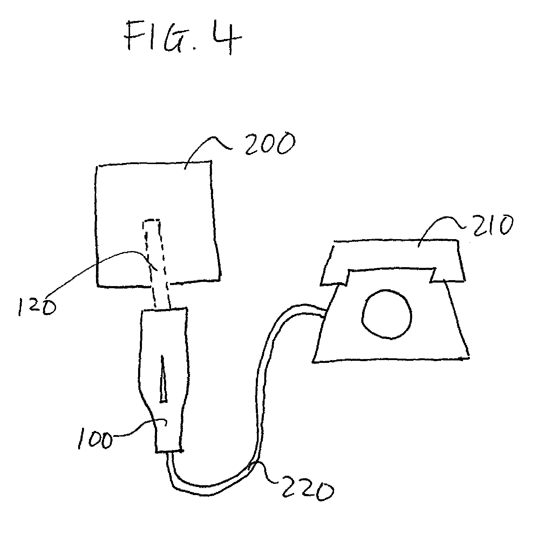

In an exemplary configuration as depicted in Figure 4, plug-in device 100 is connected to a wall jack 200 and telephone unit 210.

Wall jack 200 can be any receptacle in a wall plate that when used with a plug make electric contact between circuits. In other words, wall jack transmits signals between telephone and the PSTNs. Plug-in device connects to wall jack via cord 120 by inserting male connector into female connector of wall jack.

Telephone unit 210 can be any plain old telephone system (POTS) telephone device, such as a touch-tone phone, a rotary phone, a cordless phone and so forth. It can also be a fax machine or other communication unit that can receive and transmit signals via a phone jack. Plug-in device connects to telephone 210 via a telephone cord 220.

In preferred embodiments, a user who wants to use the plug-in device simply needs to connect one end of the plug-in device to a wall jack and connect the other end to a telephone. After activating a service subscription, the telephone is ready to make both local and long distance calls according to the present inventive subject matter. Users can still use their standard existing home telephones with the plug-in device. No upgrades is necessary for any telephones to be function with the plug-in device. This not only cuts long distance costs, but prevents wasting standard existing telephones.

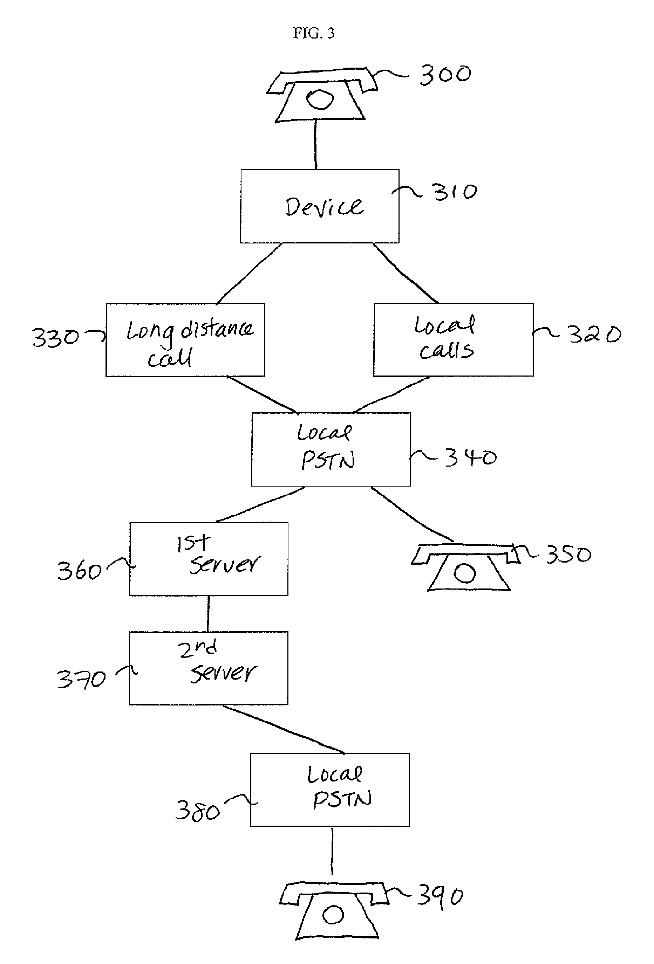

In preferred embodiments, it is contemplated as shown in Figure 3, a caller using the plug-in device can make long distance and local calls by dialing from a first telephone 300, which will transmit the dialing data to a plug-in device 310, which then will pass a local number 320 to a local PSTN 340, which then passes the call to a second telephone 350. For long distance calls, the plug-in device passes a different access number, which will also go to a local PSTN. Upon receiving information for a long distance call, local PSTN 340 will transmit the data to a first server 360, which then sends the information to a second server 370 and then to another local PSTN 380 and finally to a third telephone 390 to complete the long distance call.

Dialing from a first telephone 300 can be performed on any ordinary landline telephone that transmits and receives signals across a network. Preferably, first telephone 300 is an old plain telephone set ("POTS") such as a touch tone phone, a rotary dial phone, a cordless phone, or a fax machine. It is contemplated that multiple telephones can be used in a home or business.

Dialing data are transmitted to plug-in device 310 by having plug-in device connected to the telephone and the wall jack. Once numbers are entered into first telephone, the chip in plug-in device sorts out which number is a local number and which number is a long distance number. It is contemplated that an algorithm in the chip of plug-in device recognizes local number with shorter digits as to a long distance number. Preferably, plug-in device recognizes international long distance numbers as well as domestic U.S. long distance numbers.

For local number 320, plug-in device routes the call directly to user's telephone utility line or local PSTN 340 which will then transmit the voice signal from first telephone to second telephone 350. It is contemplated that local call charges apply. However, since most companies do not charge for local calls, users can enjoy unlimited usage of local calls without incurring an expensive telephone bill.

For long distance numbers 330, plug-in device recognize the number to be a long distance number and instead of passing it through the long distance PSTN, where toll charges will apply, it uses a different access number through the local PSTN. Preferably, the access number is a local number or a toll-free number dialed from first telephone 300 to first server. Since access number is a local number or a toll-free number (for example, a 1-800 number), no long distance charges will apply.

In preferred embodiments, PSTN 340 refers to the public switched telephone network. Long distance PSTN refers to the circuit switched inter-exchange (IXC)carrier for long distance calls. AT&T, SBC, Verizon, and Sprint are all examples of IXC carriers in America. Local PSTN refers to the local exchange carrier (LEC) that carries local calls.

First server 360 then receives signals from access number through local PSTN and is physically separated from the plug-in device. First server 360 is a server or a computer program which manipulates data. Preferably, first server can be any form, such as application servers, web servers, database servers, and so forth. In preferred embodiments, first server comprises the packet switched network is an Internet gateway server at a host site that digitizes an analog telephone signal into Internet protocol (IP) packages for transmission via the Internet. Similarly, first server is programmed to receive a call from local PSTN and to convert the analog signals from first telephone into digitized packets and send the packets into another server, second server.

In preferred embodiments, first server has the following main components:
microprocessor, digital signal processor (DSP), modem chip, a data access arrangement or DM device, memory device and one or more Ethernet ports.

It is contemplated the microprocessor for first server process the following functions: 1) receives the analog signals from first telephone through access number; 2) converts the analog signals into digitized packets; 3) sends or transmits the digitized packets to a second server via the Internet. Analog signals received by microprocessor is sent to a digital signal processor. It is further contemplated that digital signal processor can turn analog signals received by first server from first telephone into digitized packets. Once the analog signals becomes digitized packets, microprocessor send the digitized packets to second server.

In preferred embodiments, first server sends the digitized packets to a packet switched network (PSN). A PSN is a computer network where data is broken up and transmitted as individually addressed packets. For example, a PSN can be the Internet, which uses the TCP/IP protocol transfers data in packets. As each packet contains the destination address, packets may travel via different routes. The receiving device assembles the packets to recreate the original data. It is contemplated that the PSN also supports a virtual private network (VPN). A VPN is a private data network that utilizes a public telecommunication infrastructure. This creates a secure tunnel between the points within the VPN. Only devices with the correct code or key will be able to work within the VPN. The VPN network can be residing within a normal company LAN (Local Area Network), and/or over public networks such as Internet. For example, companies can use a system of VPN to create networks using the Internet as a medium for transporting encrypted data, such as voice signals. These systems use encryption and other security mechanisms to ensure that only authorized users can access the network and that the data cannot be intercepted. Providing a VPN allows different sites to be connected together over Internet in a safe and secure way and at a much lower cost.

It is further contemplated that first server adds a signal linking identifier to the series of digitized packets to second server. A signal linking identifier allows the receiving party to trace back the call to the first telephone. It can be a call-screening feature and include information such as the telephone number of the caller, the name of the caller, and time and day of the call.

Second server 370 is a server or a computer program which manipulates data. Preferably, second server can be any form, such as application servers, web servers, database servers, and so forth. In preferred embodiments, like first server, second server is an Internet gateway server at a host site. Second server is programmed to receive digitized packets from first server and convert the digitized signals back into analog signals and transmit the analog signals to a third telephone.

In preferred embodiments, second server has the following main components:
microprocessor, digital signal processor (DSP), modem chip, a data access arrangement or DM device, memory device and one or more Ethernet ports.

It is contemplated the microprocessor for second server process the following functions: (i) receives digitized signals from first server through the Internet; (ii) converts the digitized packets back into analog signals; 3) sends or transmits the analog signals to a second local PSTN, which will send the analog signals to a third telephone. It is also further contemplated that second server adds a recognition to the second local PSTN.

It is further contemplated that digital signal processor for second server can turn digitized packets transmitted from first server back into analog signals. Once the digitized packets becomes analog signals, microprocessor of second server then send the analog signals to another local PSTN 380 which will then make a local call to third telephone 390.

Preferably, second server adds a recognition code to the signals passed along to the second telephone utility line. The recognition code is programmed to receive signals sent by first server's signal linking identifier. This enables receiver to receive the call-screening feature from caller that includes information such as the telephone number of the caller, the name of the caller, and time and day of the call.

Third telephone 390 is a land line based, analog, POTS telephone located long distance from first telephone. Without the use of plug-in device, any calls from first telephone to third telephone will have to go through long distance PSTN and be charged accordingly. With the use of plug-in device, once third telephone receives a call from local PSTN, second server then transmits the analog signals to third telephone. Then third telephone replies by retracing the pathway of the digitized signal from first telephone and establish a two-way real-time voice exchange. It is contemplated that there will be no real time delay between conversations since the transmission of the signals can be done instantaneously. This eliminates analog telephone calls to be routed through long distance PSTN without the need for a computer-computer exchange or a specialized VOIP phone. Both first and second server can provide sufficient resources to approximate real-time voice communication between the calling telephone and the target telephone. In preferred embodiments, it is contemplated that a conference call can be established with multiple telephones via the use of plug-in device.

In a particularly preferred embodiment, a service that can provide users a device and subscription for long distance calls via the Internet and without the use of any computer usage or special phones becomes cost effective for the users. Companies can market and advertise a telephone service which includes the selling of the plug-in device, the instructions for the plug-in device, and the flat-fee subscription to use the plug-in device with its servers. Although such services could be provided by any number of different companies, for purposes of this application it is named Chatter Bug.

In yet another preferred embodiment, all users would first subscribe to Chatter Bug for a flat fixed monthly fee to receive the plug-in device and services. The fee paid to Chatter Bug would facilitate the activation of plug-in device and the activation of the programming of Chatter Bug's Internet servers that facilitate unlimited long distance calls, including international long distance calls. The user then can connect the plug-in device on a household landline telephone and dial for unlimited long distance calls. Other types of flat fee subscription is also contemplated. Such as a lifetime fee of a lump sum that enables the user to call without ever having to pay for long distance calls on a periodic basis.

Upon subscription, users can register their personalized information to receive the service either on a website or through a telephone number. Website registration is not necessary so users do not need to have Internet to use the plug-in device. Subscribers then only need to connect the plug-in device to their telephone and the phone jack to start using the services. The servers of Chatter Bug will recognizes the user's telephone numbers and can start to sort and route the local call versus the long distance calls. For website subscribers, they can also track phone call history and make any other changes, such as a telephone change with Chatter Bug on the website.

It is contemplated that long distance calls can include any national U.S. calls or any international calls. This is most advantageous for users who do not have any computers or special VOIP telephones to use VOIP technology for long distance calls. It is also advantageous because the receiver of the call from the user does not need to subscribe to the services to enjoy the long distance call. Furthermore, there is no extra step, such as dialing an extra "0" or "00", involved for the user when dialing to another computer based telephone on the receiving end. The user is able to cut down costs on long distance bills dramatically from the uses of traditional long distance telephone companies by having a flat-fee based subscription.

Thus, specific embodiments and applications of the methods and apparatus of a telecommunication router have been disclosed. It should be apparent, however, to those skilled in the art that many more modifications besides those already described are possible without departing from the inventive concepts herein. The inventive subject matter, therefore, is not to be restricted except in the spirit of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C .... and N, the text should be interpreted as requiring only one element from the group, not A plus N, or B plus N, etc.

## Claims

1. A method of transmitting a telephone call, comprising:
interposing a first adapter between a first telephone and a first telephone utility line, wherein the first adapter is programmed to receive a voice signal transmitted by the first telephone;
the first adapter receiving a telephone number transmitted by the first telephone, and the first adapter, as a function of the telephone number, determining whether to (i) pass the telephone number through to the first telephone utility line, or (ii) pass a different access number through to the first telephone utility line; connecting the first telephone utility line to a first server and sending the voice signal through the first telephone utility line to the first server;
sending the voice signal from the first server as a series of packets through a packet switched network to a second server;
and the second server transmitting and receiving the voice signal to a second telephone via a second telephone utility line; and in particular
providing a flat-fee subscription service to the user for use of the adapter.

2. The method of claim 1, the first adapter converting at least some of the voice signal to the series of packets.

3. The method of claim 1 or 2, further comprising sending the voice signal through the packet switched network with the Internet.

4. The method of one of the preceding claims, further comprising selecting the access number to avoid use of a long distance public switched telephone network (PSTN).

5. The method of one of the preceding claims, further comprising adding a signal linking identifier to the first server so that the series of packets enables a receiving party to trace back to the first telephone.

6. The method of one of the preceding claims , further comprising adding a recognition code to the second server so that the signals passes along to the second telephone utility line.

7. The method of one of the preceding claims, further comprising providing a website that has registration functionality and/or call history records.

8. The method of one of the preceding claims, further enabling the adapter to communicate with the telephone as a POTS device.

9. The method of claim 8, further comprising receiving a packet stream, converting the packet stream to an analog signal, and transmitting the analog signal through the first connector to the telephone.

10. The method of one of the preceding claims, further providing the first adapter contains no identifier that precludes its use on a third telephone instead of the first telephone.

11. The method of one of the preceding claims, further comprising remote programming of the adapter.

12. The method of one of the preceding claims, further comprising configuring the first adapter with the access number to dial.

13. A system for transmitting a telephone call, comprising:
a first adapter that can be functionally interposed between a first telephone and a first telephone utility line, and is programmed to receive a voice signal transmitted by the first telephone;
the first adapter is programmed to receive a telephone number transmitted by the first telephone, and as a function of the telephone number to determine whether to (i) pass the telephone number through to the first telephone utility line, or (ii) pass a different access number through to the first telephone utility line to connect the first telephone utility line with a first server;
the first server is programmed to send the voice signal as a series of packets through a packet switched network to a second server;
and the second server is programmed to transmit and receive the voice signal to a second telephone via a second telephone utility line;
to in particular provide a flat-fee subscription service to the user for use of the adapter.

14. The system of claim 13, wherein the first adapter is programmed to convert at least some of the voice signal to the series of packets.

15. The system of one of claims 13 to 14, wherein the first adapter has an analog male telephone plug and an analog female telephone jack.

16. The system of one of claims 13 to 15, wherein the first adapter is programmed to select the access number to avoid use of a long distance public switched telephone network (PSTN).

17. The system of one of claims 13 to 16, wherein the first adapter is programmed to add a signal linking identifier to the first server so that the series of packets enables a receiving party to trace back to the first telephone.

18. The system of one of claims 13 to 17, wherein the second server is programmed to add a recognition code so that the signals passes along to the second telephone utility line.

19. The system of one of claims 13 to 18, the adapter further comprising a circuit that enables the adapter to communicate with the telephone as a POTS device.

20. The system of claim 19, the circuit of the adapter being programmed to receive a packet stream, convert the packet stream to an analog signal, and transmit the analog signal through the first connector to the telephone.

21. The system of one of claims 13 to 20, the first adapter containing no identifier that precludes its use on a third telephone instead of the first telephone.

22. The system of one of claims 13 to 21, the adapter comprising a software that facilitates remote programming of the adapter.

23. The system of one of claims 13 to 22, wherein the servers being provided with sufficient resources to approximate real-time voice communication between the calling telephone and the target telephone.
